# EUROPEAN PATENT APPLICATION

(11) **EP 4 160 332 A1**
(43) Date of publication of application: **05.04.2023**
(21) Application number: 21812240.6
(22) Date of filing: 26.05.2021
(51) Int. Cl.: G05B 19/418, G06Q 50/06, H02J 3/38, H02J 13/00

(54) **INFORMATION PROCESSING DEVICE, INFORMATION PROCESSING METHOD, AND PROGRAM FOR SAME**

(30) Priority: 26.05.2020 JP 2020091788
(71) Applicant: NTT Communications Corporation, Tokyo 100-8019 (JP)
(72) Inventor: SAKAINO, Akira, Tokyo 100-8019 (JP); NIITSUMA, Hideaki, Tokyo 100-8019 (JP); SUZUKI, Yoichi, Tokyo 100-8019 (JP); ITO, Masataka, Tokyo 100-8019 (JP)
(74) Representative: Nederlandsch Octrooibureau
(86) International application number: PCT/JP2021/020051
(87) International publication number: WO 2021/241650

(57) **Abstract**

An aspect of an information processing apparatus according to this invention includes an acquisition unit that acquires power sales information related to a plurality of types of electric power of different power generating systems, a generation unit that generates power use support information for supporting selective use of one or more types of electric power from the plurality of types of electric power based on the power sales information, and an output unit that outputs the power use support information.

## Description

### FIELD

The present invention relates generally to an information processing apparatus, an information processing method, and a program thereof for supporting use of a plurality of types of electric power of different power generating systems.

### BACKGROUND

Solution businesses that support the circular economy are emerging, mainly in Europe. It is said that in Japan, since 2020, there are some manufacturing companies that have taken steps in large-scale investment for the circular economy, and there is a demand for technology that contributes to the circular economy through technology services based on the telecommunications business.

### CITATION LIST

### PATENT LITERATURE

Patent Literature 1: Japanese Patent Application KOKAI Publication No. 2004-310440

### SUMMARY

### TECHNICAL PROBLEM

If electric power is consumed in a use process of a product, carbon dioxide (CO₂) is emitted to obtain the electric power. Various power generating systems such as thermal power generation, hydraulic power generation, wind power generation, and solar power generation are known. The CO₂ emission amount varies depending on the power generating system. For example, power generation relying on fossil fuels increases CO₂ emissions, but power generation using renewable energies can reduce the CO₂ emission amount to nearly 0. In recent years, there has been an increasing need to use electric power in consideration of the CO₂ emission amount, etc.

This invention is made in response to the above circumstances and attempts to provide a technology for outputting information for supporting selection of electric power of different power generating systems.

### SOLUTION TO PROBLEM

To solve the above-described problem, one aspect of an information processing apparatus according to the present invention includes an acquisition unit that acquires power sales information related to a plurality of types of electric power of different power generating systems, a generation unit that generates power use support information for supporting selective use of one or more types of electric power from the plurality of types of electric power based on the power sales information, and an output unit that outputs the power use support information.

### ADVANTAGEOUS EFFECTS OF INVENTION

According to an aspect of the present invention, a technology for outputting information for supporting selection of electric power of different power generating systems can be provided.

### BRIEF DESCRIPTION OF THE DRAWINGS

FIG. 1 is a block diagram showing an example of an information processing system according to an embodiment.
FIG. 2 is a block diagram showing an example of a schematic configuration of an information processing apparatus according to the embodiment.
FIG. 3 is a functional block diagram showing an example of a processor of the information processing apparatus according to the embodiment.
FIG. 4 is a diagram showing an example of power use support information generated by the information processing apparatus according to the embodiment.
FIG. 5 is a diagram showing an example of power request information of an end device that is transmitted to the information processing apparatus according to the embodiment.
FIG. 6 is a diagram showing an example of power request information of a plant, etc. that is transmitted to the information processing apparatus according to the embodiment.
FIG. 7 is a block diagram showing an example of a schematic configuration of an information output system of the plant according to the embodiment.
FIG. 8 is a flowchart showing an example of output processing of the power use support information that is performed by the information processing apparatus according to the embodiment.

### DETAILED DESCRIPTION

An embodiment will be described below with reference to the drawings.

### (Summary)

An information processing system according to the embodiment provides power use support information for supporting selective use of one or more types of electric power from a plurality of types of electric power in a use process of a product. For example, the power use support information includes a type of electric power that can be used for each region and a type of electric power that can be used for each time zone. The information processing system requests one or more types of electric power selected according to an input from a user from among a plurality of types of electric power included in the power use support information, and supplies the one or more types of electric power requested to a designated product or the like.

Further, the power use support information includes a price and a CO₂ emission amount of electric power for each type of electric power. The operation of selecting one or more types of electric power from among the plurality of types of electric power may be received in real time when the electric power is purchased and used, or may be received before the electric power is used, such as several hours before, a day before, several days before, or a week before. The latter is a purchase or reservation in the concept of a futures contract. If a purchased or reserved amount of electric power derived from renewable energy cannot be supplied due to bad weather or the like, the information processing system presents several options as alternative means and receives reselection of electric power based on the options.

Examples of options are as follows.
(1) Option to purchase another type of electric power
(2) Option to purchase electric power derived from another renewable energy at a higher price
(3) Option to reduce the amount of electric power purchased
(4) Option to cancel purchase of electric power

For example, when electric power to be charged to an electric vehicle or electric power to be supplied to a household electrical appliance is selected, one or more types of electric power can be selected and used with reference to the power use support information. When selecting the type of electric power, the user can add to the selection conditions not only the price of electric power but also the amount of CO₂ emissions generated to obtain the electric power, etc. In addition, when a reserved amount of electric power derived from renewable energy is not supplied due to bad weather or the like, a manufacturer of a product or component can systematically minimize a CO₂ emission amount in manufacturing and transporting of one's own product or component by changing a plan such as performing the manufacturing and transporting of the product or component as scheduled, reducing a manufacturing and transporting amount, or temporarily stopping the manufacturing and transporting with reference to the options presented from the information processing system.

Further, as a part of the power use support information, information related to an influence on a price of a product or component according to a CO₂ emission amount for each type of electric power used may be provided. If the power type used is different, the price of the same product or component is different due to an influence of an environmental impact equivalent amount determined based on the CO₂ emission amount according to the power type. For example, a price of a product or component manufactured using electric power having a large CO₂ emission amount tends to be higher than that of a product or component manufactured using electric power having a small CO₂ emission amount. The user can select and use electric power with reference to the information related to the influence on the price of the product or component.

### (Configuration Example)

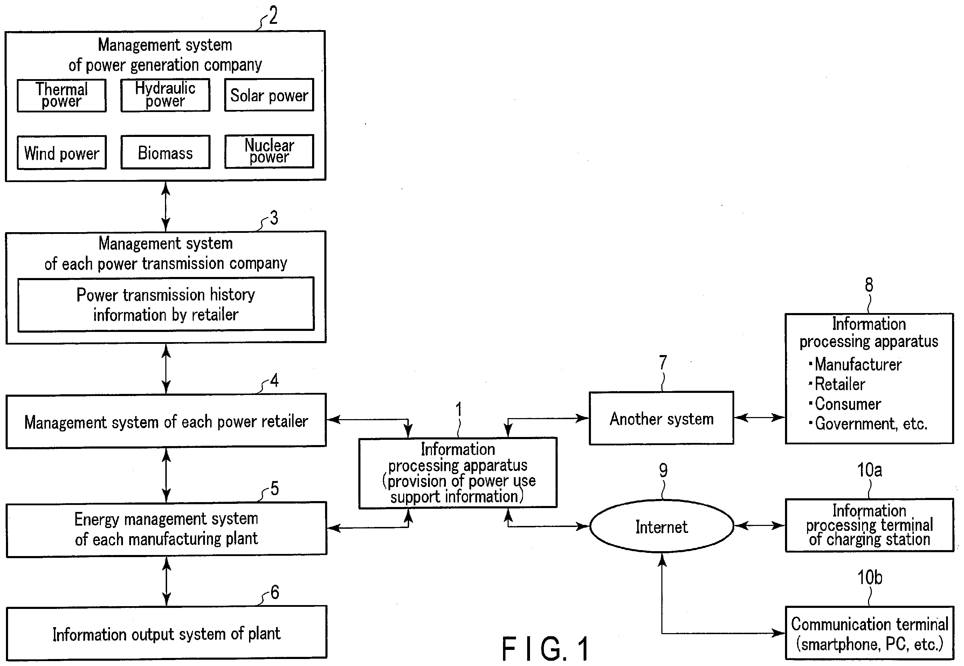

FIG. 1 is a block diagram showing an example of the information processing system according to the embodiment.

As shown in FIG. 1, the information processing system includes an information processing apparatus 1. The information processing apparatus 1 directly or indirectly communicates with a management system 2 of each power generation company, a management system 3 of each power transmission company, a management system 4 of a power retailer, an energy management system 5 of a manufacturing plant, and an information output system 6 of the plant, and transmits and receives information to and from each system.

For example, each power generation company supplies a plurality of types of electric power such as thermal power, hydraulic power, solar power, wind power, biomass, and nuclear power, and the management system 2 of each power generation company transmits a plurality of types of power generation information such as thermal power, hydraulic power, solar power, wind power, biomass, and nuclear power. The power generation information includes information such as a type of electric power, an amount of electric power, a region, and a supply time zone. The management system 3 of each power transmission company receives the power generation information from the management system 2 of each power generation company, generates power transmission history information by retailer based on the power generation information, and transmits the power transmission history information. The management system 4 of the power retailer receives the power transmission history information, generates power sales information based on the power transmission history information, and transmits the power sales information. The power sales information includes information such as a power retailer name, a power supply available time zone, a power supply available region, a power type, a maximum suppliable power capacity, a minimum suppliable guaranteed power capacity, a current suppliable power capacity, a day unit price, a one-hour-previous future unit price, a one-day-previous future unit price, a tax rate, and an available settlement means. The energy management system 5 of the manufacturing plant generates energy information including power purchase history information, power consumption history information, and fuel consumption history information based on various kinds of information from the information output system 6 of the plant, and transmits the energy information.

The information processing apparatus 1 receives the power sales information from the management system 4 of the power retailer, generates power use support information based on the power sales information, and outputs the power use support information to the energy management system 5 of the manufacturing plant, etc. The information processing apparatus 1 also calculates a CO₂ emission amount for each power type, and generates power use support information including the CO₂ emission amount for each power type.

The energy management system 5 receives and displays the power use support information output from the information processing apparatus 1. A person in charge selects one or more types of electric power from among a plurality of types of electric power included in the power use support information while viewing the power use support information displayed on the energy management system 5. The energy management system 5 receives the selection of one or more types of electric power, and requests the selected one or more types of electric power. The management system 4 of each power retailer supplies the one or more types of electric power requested.

In addition, the information processing apparatus 1 transmits and receives information to and from an information processing apparatus 8 of a manufacturer, a sales company, a consumer, the government, or the like via another system 7. Furthermore, the information processing apparatus 1 communicates with a communication terminal 10b such as a smartphone or personal computer of each individual via a communication network 9 such as the Internet to transmit and receive information to and from the communication terminal 10b. The information processing apparatus 1 outputs the power use support information to the communication terminal 10b. Alternatively, the information processing apparatus 1 communicates with an information processing terminal 10a of a charging station via the communication network 9 such as the Internet to transmit and receive information to and from the information processing terminal 10a of the charging station. The information processing apparatus 1 outputs the power use support information to the information processing terminal 10a of the charging station, and the information processing terminal 10a of the charging station transfers the power use support information to the communication terminal 10b.

For example, the communication terminal 10b receives the power use support information output from the information processing apparatus 1, and displays the power use support information. The user selects one or more types of electric power from among the plurality of types of electric power included in the power use support information while viewing the power use support information displayed on the communication terminal 10b. The communication terminal 10b receives the selection of one or more types of electric power, and requests the one or more types of electric power selected. The information processing terminal 10a of the charging station receives the power request from the communication terminal 10b, and transmits the power request to a host device. For example, the management system 4 of each power retailer supplies the requested electric power to the information processing terminal 10a of the charging station based on the power request from the information processing terminal 10a of the charging station.

Each device and each system shown in FIG. 1 can be realized by, for example, a general-purpose computer or a specially designed computer including a processor, a main storage unit, an auxiliary storage unit, a communication interface, an input/output interface, etc.

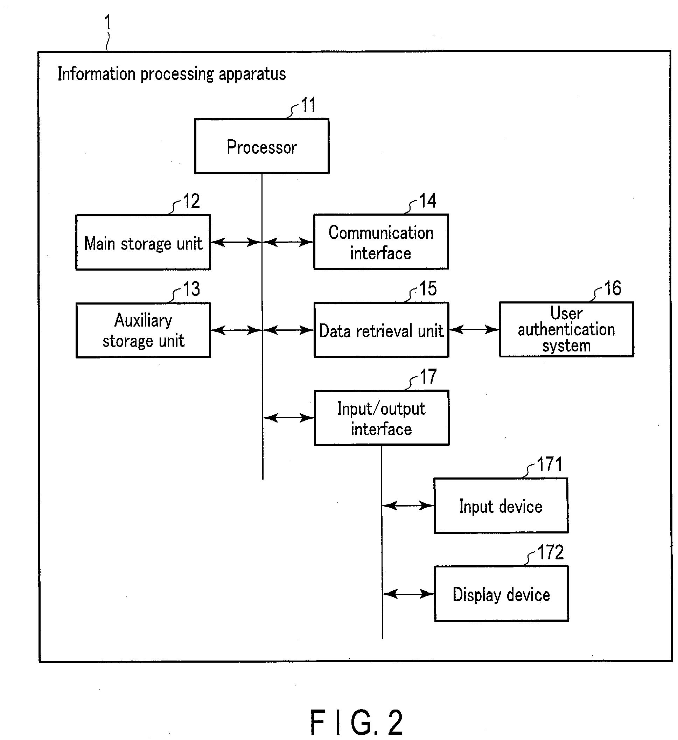

FIG. 2 is a block diagram showing a schematic configuration of the information processing apparatus 1 according to the embodiment.

As shown in FIG. 2, the information processing apparatus 1 includes a processor 11, a main storage unit 12, an auxiliary storage unit 13, a communication interface 14, a data retrieval unit 15, a user authentication system 16, and an input/output interface 17. Further, the information processing apparatus 1 includes an input device 171 and a display device 172 connected to the input/output interface 17.

The processor 11 is a central processing unit (CPU), a micro processing unit (MPU), or a digital signal processor (DSP). Alternatively, the processor 121 is a combination of two or more of these. The processor 11 is connected to each unit, receives a signal from each unit, and outputs a signal to each unit. The processor 11 serves as the core of a computer that executes calculation and control necessary for calculating a CO₂ emission amount for each power type and generating the power use support information. The processor 11 executes calculation and control to realize various functions based on a program such as system software, firmware, or application software stored in the auxiliary storage unit 13 or the like.

The main storage unit 12 includes a read only memory (ROM) and a random access memory (RAM). The ROM is a non-transitory computer-readable storage medium, stores a part or all of the programs described above, and also stores data, various setting values, or the like used when the processor performs various processing. The RAM is a working storage area, and temporarily stores processing data, etc. of the processor 11.

The auxiliary storage unit 13 is a non-transitory computer-readable storage medium, and is composed of, for example, at least one of an electric erasable programmable read-only memory (EEPROM) (registered trademark), a hard disk drive (HDD), a solid state drive (SSD), or the like. The auxiliary storage unit 13 stores a part or all of the programs described above, and also stores data, various setting values, or the like used when the processor performs various processing. In addition, the auxiliary storage unit 13 stores the CO₂ emission amount for each power type calculated by the processor 11 and the power use support information for supporting selective use of one or more types of electric power from among a plurality of types of electric power.

The communication interface 14 communicates with each system to transmit and receive various kinds of information. The communication interface 14 also communicates with the information processing apparatus 8 via another system 7 to transmit and receive various kinds of information. In addition, the communication interface 14 communicates with the communication terminal 10b, etc. via the communication network 9 to transmit and receive various kinds of information. For example, the communication interface 14 receives the power sales information from the management system 4 of each power retailer. The communication interface 14 also receives the energy information including the power purchase history, power consumption history, and fuel consumption history from the energy management system 5 of each manufacturing plant. The power purchase history is information by power source type and by time zone. The power consumption history is information by device in the plant and by time zone. The fuel consumption history is information by device in the plant and by time zone.

The data retrieval unit 15 retrieves, based on a retrieval request for power use support information from the outside, the power use support information from a database, and provides the power use support information.

Based on user identification information included in the retrieval request, the user authentication system 16 authenticates the retrieval request if the user is authorized, and denies the retrieval request if the user is not authorized.

The input/output interface 17 receives an input from the input device 171, notifies the processor 11 of the input, and outputs display information to the display device 172 based on a display control signal or the like from the processor 11.

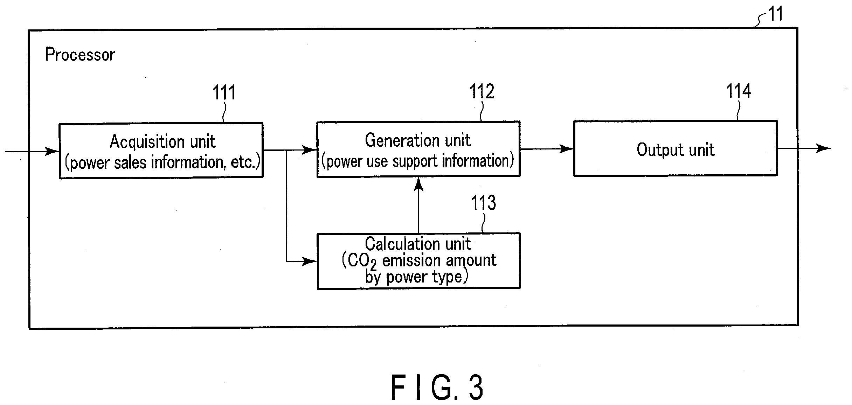

FIG. 3 is a functional block diagram showing an example of the processor of the information processing apparatus according to the embodiment.

As shown in FIG. 3, the processor 11 includes an acquisition unit 111, a calculation unit 112, a generation unit 113, and an output unit 114. The processor 11 realizes functions of these units by executing programs stored in at least one of the main storage unit 12 or the auxiliary storage unit 13. That is, the functions of these units are realized by cooperation between the processor 11 and the programs. These units may be realized by circuit configurations independent of the processor 11.

The acquisition unit 111 acquires power sales information, etc. related to a plurality of types of electric power of different power generating systems from among various kinds of information received by the communication interface 14.

The calculation unit 112 calculates a CO₂ emission amount based on electric power of different power generating systems with different calculation methods. That is, a CO₂ emission amount by power type is calculated based on a CO₂ emission coefficient by power type. For example, a CO₂ emission amount calculation coefficient for thermal power generation is set to a value greater than a CO₂ emission amount calculation coefficient for solar power generation.

The generation unit 113 generates power use support information based on the various kinds of information, etc. received by the communication interface 14. For example, the generation unit 113 generates the power use support information based on the power sales information, the CO₂ emission amount by power type, etc.

The output unit 114 outputs the power use support information. The power use support information includes a supply available region for each power type. The power use support information also includes a supply available time zone for each power type. The power use support information includes a carbon dioxide emission amount for each power type. The power use support information includes a power price for each power type. The power use support information includes a power price corresponding to a purchase date and time and a use date and time. The power use support information includes information related to alternative power that replaces designated power if the designated power is not supplied at a designated date and time.

Further, the power use support information includes information related to an influence on a price of a product or component according to a CO₂ emission amount for each power type. If the power type used is different, the price of the same product or component is different due to an influence of an environmental impact equivalent amount determined based on the CO₂ emission amount according to the power type. For example, the influence on a price of a product or component according to a CO₂ emission amount is indicated by a rank or the like so that the user can selectively use electric power with reference to the information related to the influence on the price of the product or component.

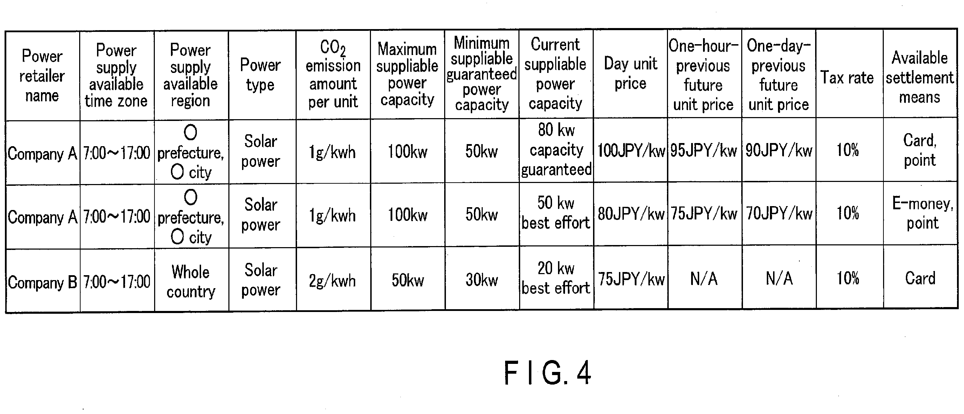

FIG. 4 is a diagram showing an example of the power use support information generated by the information processing apparatus according to the embodiment.

As shown in FIG. 4, the power use support information includes information such as a power retailer name, a power supply available time zone, a power supply available region, a power type, a CO₂ emission amount per unit, a maximum suppliable power capacity, a minimum guaranteed suppliable power capacity, a current suppliable power capacity, a day unit price, a one-hour-previous future unit price, a one-day-previous future unit price, a tax rate, and an available settlement means.

The item of power supply available region may be excluded from the power use support information based on position information of a power supply destination and information of a power supply available region by power type included in power sales information. For example, the communication interface 14 of the information processing apparatus 1 acquires from the energy management system 5 position information of a plant or the like to which electric power is supplied, and acquires from the communication terminal 10b position information of the information processing terminal 10a of a charging station to which electric power is supplied. The processor 11 determines a type of electric power that can be supplied to the power supply destination and a type of electric power that cannot be supplied to the power supply destination based on the position information of the power supply destination and the information of the power supply available region by power type included in the power sales information, and performs control to transmit power use support information including information on the type of electric power that can be supplied to the power supply destination and not including information on the type of electric power that cannot be supplied to the power supply destination. The communication interface 14 transmits the power use support information including the information on the type of electric power that can be supplied to the power supply destination and not including the information on the type of electric power that cannot be supplied to the power supply destination. As a result, the user does not need to view the information of the power supply available region and does not need to make a determination based on the information.

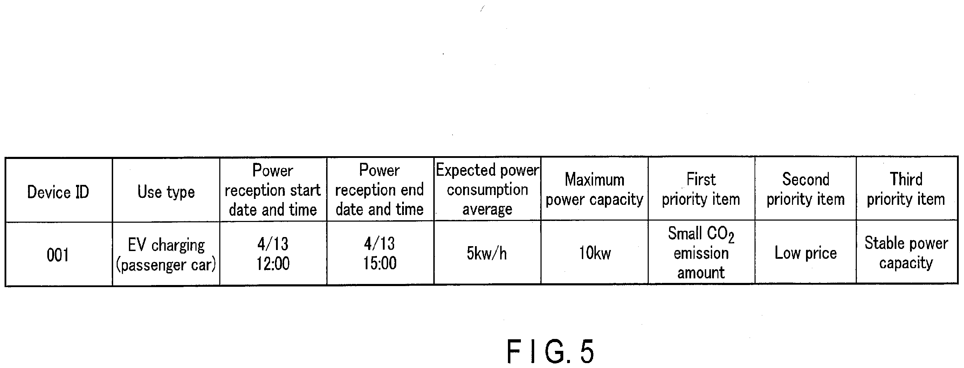

FIG. 5 is a diagram showing an example of power request information R1 of an end device that is transmitted to the information processing apparatus according to the embodiment.

For example, the end device is a system of an electric car, a robot, or a storage battery system that can be charged based on electric power from an information processing terminal of a charging station, and transmits the power request information R1 from the end device to the information processing apparatus 1 or the like.

As shown in FIG. 5, the power request information R1 includes a device ID, a use type (e.g., EV charging, a passenger car), a power reception start date and time, a power reception end date and time, an expected power consumption average, a maximum power capacity, a first priority item (e.g., a CO₂ emission amount), a second priority item (e.g., a price), a third priority item (e.g., power supply stability), etc.

The information processing apparatus 1 may generate power use support information corresponding to the end device based on the power request information R1. For example, power use support information is generated that guides the types of electric power corresponding to the first, second, and third priority items included in the power request information R1 in accordance with the priority. In addition, a type of electric power that does not correspond to any one of the first, second, and third priority items may be excluded from the power use support information.

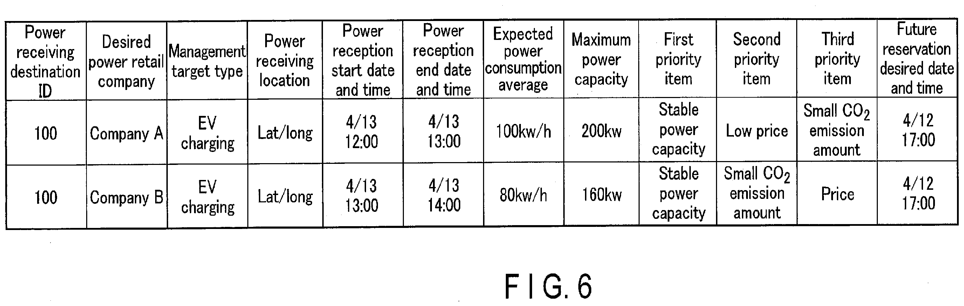

FIG. 6 is a diagram showing an example of power request information R2 of a plant, etc. that is transmitted to the information processing apparatus according to the embodiment.

For example, the energy management system 5 transmits the power request information R2 from a plant or the like to the information processing apparatus 1 or the like.

As shown in FIG. 6, the power request information R2 includes a power receiving destination ID of a plant, etc., a desired power retail company, a management target type, a power reception location, a power reception start date and time, a power reception end date and time, an expected power consumption average, a maximum power capacity, a first priority item (e.g., stability of power supply), a second priority item (e.g., a CO₂ emission amount), a third priority item (e.g., a price), a future reservation desired date and time, etc. It is assumed that the first priority has the highest priority, followed by the second priority, and followed by the third priority.

The information processing apparatus 1 may generate power use support information corresponding to the power receiving destination based on the power request information R2. For example, power use support information is generated that guides the types of electric power corresponding to the first, second, and third priority items included in the power request information R2 in accordance with the priority. In addition, a type of electric power that does not correspond to any one of the first, second, and third priority items may be excluded from the power use support information.

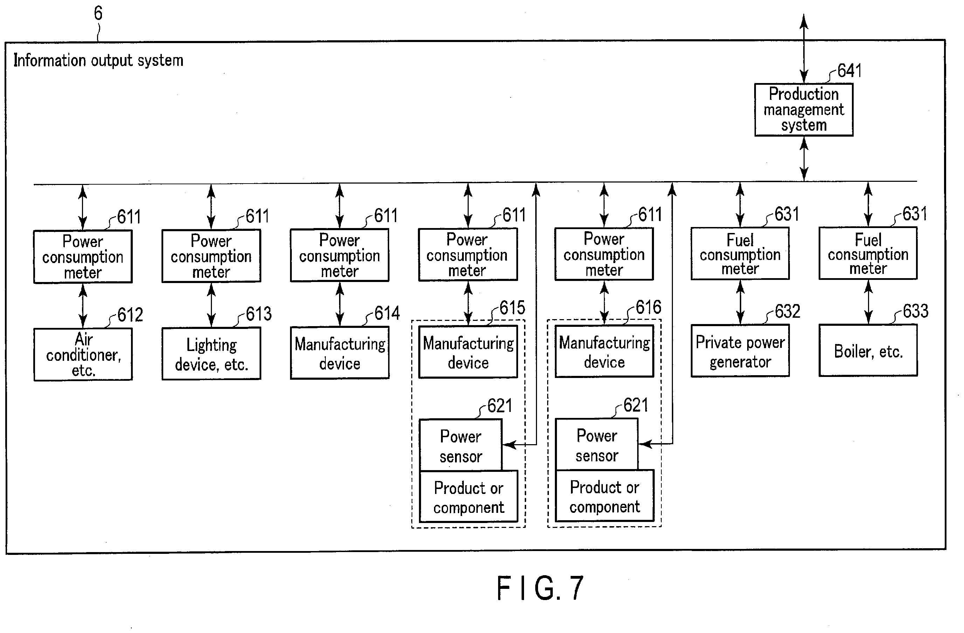

FIG. 7 is a block diagram showing an example of a schematic configuration of the information output system of the plant according to the embodiment.

As shown in FIG. 7, the information output system 6 outputs information including a time-synchronized time stamp. For example, the information output system 6 outputs power consumption amounts by time zone provided from power consumption meters 611 of an air conditioner 612 and a lighting device 613. The information output system 6 also outputs identification information of a product or component and a power consumption amount by time zone provided from power consumption meters 611 of manufacturing devices 614, 615, and 616. In addition, a power sensor 621 is attached to each product or component, and the information output system 6 outputs identification information of the product or component and a power consumption amount consumed by the product or component provided from the power sensor 621. The information output system 6 outputs a fuel consumption amount by time zone provided from fuel consumption meters 633 of a private power generator 631 and a boiler 632.

A production management system 641 of the plant manages an operation time of each device in the plant by product, and outputs the operation time of each device in the plant by product.

### (Operation Example)

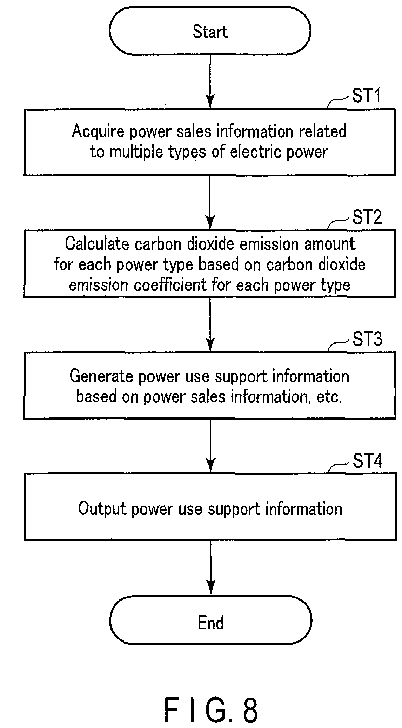

FIG. 8 is a flowchart showing an example of output processing of the power use support information performed by the information processing apparatus according to the embodiment.

The acquisition unit 111 of the information processing apparatus 1 acquires power sales information related to a plurality of types of electric power of different power generating systems, etc. from among various kinds of information received by the communication interface 14 (ST1). The power sales information includes a supply available region, a supply available time zone, and an electric power price according to a purchase date and time and a use date and time for each power type.

The calculation unit 112 calculates a CO₂ emission amount by power type based on a CO₂ emission coefficient by power type (ST2) .

The generation unit 113 generates power use support information based on various kinds of information, etc. received by the communication interface 14 (ST3). For example, the generation unit 113 generates the power use support information based on the CO₂ emission amount by power type calculated by the calculation unit 112, etc. in addition to the power sales information. Thus, the power use support information includes the CO₂ emission amount for each power type.

The output unit 114 outputs the power use support information (ST4). The communication interface 14 transmits the power use support information to the information processing terminal 10a or the communication terminal 10b of the charging station that requests the power use support information.

The information processing terminal 10a or the communication terminal 10b of the charging station receives and displays the power use support information. The user selects one or more types of electric power from among a plurality of types of electric power with reference to the power use support information via the communication terminal 10b. Alternatively, one or more types of electric power are selected from among the plurality of types of electric power with reference to the power use support information via the information processing terminal 10a of the charging station.

The communication terminal 10b requests the selected electric power, and the information processing terminal 10a of the charging station receives the power request from the communication terminal 10b and transmits the power request to a host device. Alternatively, the information processing terminal 10a of the charging station requests the electric power selected by the user to the host device.

For example, the management system 4 of each power retailer supplies the requested power to the information processing terminal 10a of the charging station based on the power request from the information processing terminal 10a of the charging station.

Note that the power use support information provided to the plant, etc. may include information related to alternative power. The information related to alternative power includes designated power, a price of the designated power, alternative power that replaces the designated power if the designated power is not supplied at a designated date and time, and a price of the alternative power. For example, the designated power is solar power, and the alternative power is thermal power. If electric power is used in a plant or the like, electric power may be purchased in advance.

In such a case, when the user designates electric power to be purchased, the user requests alternative power with reference to a price of the electric power to be purchased, a price of the alternative power, etc. Accordingly, if the designated power is not supplied at a designated date and time, it is possible to receive supply of the alternative power. Further, when the user designates electric power to be purchased, the user selects alternative power and designates a purchase amount of the alternative power, so that the user can receive supply of the alternative power of the designated purchase amount if the designated power is not supplied at a designated date and time. In addition, when the user designates electric power to be purchased, the user can cancel purchase of the designated power by eliminating a need for alternative power.

### (Supplementary Notes)

The following is a supplemental explanation for an example of power type selection, etc.

### <Example of Power Type Selection>

For example, the user selects a power type with reference to the power use support information. By referring to the power use support information, it is possible to determine whether to select and use inexpensive power such as thermal power with a large amount of CO₂ emission or to select and use expensive power such as solar power with a small amount of CO₂ emission.

In addition, the user can refer to the power use support information and mainly select and use electric power generated by solar power or wind power when the price of the power decreases during the daytime or during the time when the wind power is strong, and mainly select and use electric power generated by thermal power or nuclear power when the price of the power decreases during the nighttime.

### <Example of Calculation Method of CO₂ Emission Amount for Each Power Type>

For example, the information processing apparatus 1 stores a CO₂ emission amount per unit time by power type in advance, measures a use time and a use amount by selected power type, and according to the measurement values and the above CO₂ emission amount per unit time, calculates a CO₂ emission amount by power type.

The information processing apparatus 1 also calculates a CO₂ emission amount by power type based on a CO₂ emission coefficient by power type. The information processing apparatus 1 acquires a CO₂ emission amount (g/kwh) required for processing from power generation to power transmission by power source type from a report of a power company (power generation/power transmission and distribution/power retailer), the government, etc., and registers a value thereof as a CO₂ emission coefficient by power retailer and by power source type. The information processing apparatus 1 updates this CO₂ emission coefficient every time information from the power company and information of a government report, etc. are updated.

According to the embodiment described above, an information processing apparatus, an information processing method, and a program thereof that can provide a technology for outputting information for supporting selection of electric power of different power generating systems can be provided.

The present invention should not be limited to the above-described embodiment as it is, but can be embodied by modifying the constituent elements without departing from the gist of the invention at the implementation stage. Further, various inventions can be formed by appropriately combining a plurality of constituent elements disclosed in the above-described embodiment. For example, some constituent elements may be omitted from the constituent elements indicated in the embodiment. Furthermore, constituent elements in different embodiments may be appropriately combined.

### REFERENCE SIGNS LIST

- 1:: information processing apparatus
- 2:: management system of power generation company
- 3:: management system of power transmission company
- 4:: management system of power retailer
- 5:: energy management system of manufacturing plant
- 6:: information output system of plant
- 7:: another system
- 8:: information processing apparatus
- 9:: communication network
- 10:: communication terminal
- 11:: processor
- 12:: main storage unit
- 13:: auxiliary storage unit
- 14:: communication interface
- 15:: data retrieval unit
- 16:: user authentication system
- 17:: input/output interface
- 111:: acquisition unit
- 112:: generation unit
- 113:: calculation unit
- 114:: output unit
- 171:: input device
- 172:: display device
- 611:: power consumption meter
- 612:: air conditioner
- 613:: lighting device
- 614, 615, and 616:: manufacturing device
- 621:: power sensor
- 631:: fuel consumption meter
- 632:: private power generator
- 633:: boiler
- 641:: production management system of plant

## Claims

1. An information processing apparatus comprising:
an acquisition unit configured to acquire power sales information related to a plurality of types of electric power of different power generating systems;
a generation unit configured to generate power use support information for supporting selective use of one or more types of electric power from the plurality of types of electric power based on the power sales information; and
an output unit configured to output the power use support information.

2. The information processing apparatus according to claim 1, wherein the power use support information includes a supply available region for each of the types of electric power.

3. The information processing apparatus according to claim 1 or 2, wherein the power use support information includes a supply available time zone for each of the types of electric power.

4. The information processing apparatus according to any one of claims 1 to 3, wherein the power use support information includes a carbon dioxide emission amount for each of the types of electric power.

5. The information processing apparatus according to claim 4, comprising a calculation unit configured to calculate the carbon dioxide emission amount for each of the types of electric power based on a carbon dioxide emission coefficient for each of the types of electric power.

6. The information processing apparatus according to any one of claims 1 to 5, wherein the power use support information includes a power price for each of the types of electric power.

7. The information processing apparatus according to any one of claims 1 to 6, wherein the power use support information includes a power price according to a purchase date and time and a use date and time.

8. The information processing apparatus according to any one of claims 1 to 7, wherein the power use support information includes information related to alternative power that replaces designated power if the designated power is not supplied at a designated date and time.

9. The information processing apparatus according to claim 1, wherein the power use support information includes information related to an influence on a price of a product or component according to a carbon dioxide emission amount for each of the types of electric power.

10. An information processing method comprising:
acquiring power sales information related to a plurality of types of electric power of different power generating systems;
generating power use support information for supporting selective use of one or more types of electric power from the plurality of types of electric power based on the power sales information; and
outputting the power use support information.

11. A program for causing a computer to execute:
acquiring power sales information related to a plurality of types of electric power of different power generating systems;
generating power use support information for supporting selective use of one or more types of electric power from the plurality of types of electric power based on the power sales information; and
outputting the power use support information.
